# EUROPÄISCHE PATENTSCHRIFT

(11) **EP 4 098 556 B1**
(45) Veröffentlichungstag und Bekanntmachung des Hinweises auf die Patenterteilung: **04.10.2023**
(21) Anmeldenummer: 22153630.3
(22) Anmeldetag: 01.06.2021
(51) Int. Cl.: B64C 1/14

(54) **TÜREINHEIT FÜR EIN FAHRZEUG**
DOOR UNIT FOR A VEHICLE
UNITÉ DE PORTE POUR UN VÉHICULE

(43) Veröffentlichungstag der Anmeldung: 07.12.2022
(62) Teilanmeldung aus: 21177111.8
(73) Patentinhaber: Airbus Operations GmbH, 21129 Hamburg (DE)
(72) Erfinder: Martin, Alexander, 21129 Hamburg (DE)
(74) Vertreter: Schicker, Silvia

(56) Entgegenhaltungen:
- EP-A2- 1 780 119
- DE-A1-102019 112 336
- US-A- 2 748 855
- US-A1- 2020 224 462

## Beschreibung

Die Erfindung betrifft eine Türeinheit, ein Türsystem und ein Fahrzeug mit solch einer Türeinheit bzw. solch einem Türsystem. Insbesondere betrifft die Erfindung eine Türeinheit für eine Notausgangstür eines Luftfahrzeugs.

Fahrzeugtüren dienen dem Zweck, in einer Schließstellung eine Öffnung in einem Fahrzeug zu bedecken und zu verschließen und dabei einen Fahrzeuginnenraum gegenüber der Fahrzeugumgebung abzuschotten. Fahrzeugtüren können über Türangeln an einem Türrahmen montiert werden. Ein solcher Türrahmen kann Teil des Fahrzeugrumpfs oder in diesen eingebaut sein. Um bei der Montage eine Justierung der Fahrzeugtür gegenüber dem Türrahmen zu erleichtern, kann die Türangel ein justierbares Drehgelenk zwischen der Fahrzeugtür und Türrahmen umfassen. Beispielsweise umfasst ein solches justierbares Drehgelenk einen exzentrischen Bolzen mit zwei radial versetzten Abschnitten, von denen ein erster mit der Tür verbunden ist und ein zweiter mit dem Türrahmen verbunden ist. Durch Rotation des Bolzens kann eine Justierung der Fahrzeugtür gegenüber dem Türrahmen in einer ersten Richtung durchgeführt werden. Es können auf den Bolzen axiale Abstandsscheiben aufgeschoben werden, um eine Justierung der Fahrzeugtür gegenüber dem Türrahmen in einer zweiten Richtung durchzuführen. Die Rotation des Bolzens und die Anzahl oder/und Größe der Abstandsscheiben kann unter Umständen bereits vor der Montage der Tür eingestellt werden, beispielsweise in Kenntnis einer Verformung des Fahrzeugrumpfs zum Zeitpunkt der Türmontage.

Bei bestimmten Fahrzeugtypen müssen Sicherheitsstandards eingehalten werden. Beispielsweise ist es für Flugzeugtüren erforderlich, dass diese sowohl am Boden als auch im Flugbetrieb sicher den Flugzeuginnenraum verschließen. Dabei muss die Tür auch während eines vorherrschenden Druckunterschieds zwischen dem Flugzeuginnenraum und der Flugzeugumgebung sicher verschlossen sein. Andererseits müssen sich die Türen im Notfall leicht und schnell öffnen lassen. Eine weitere Besonderheit stellen hier Notausgangstüren dar, die nicht zum normalen Ein- und Aussteigen von Personen vorgesehen sind, sondern nur im Notfall geöffnet werden. Solche Türen werden beispielsweise durch einen Flugbegleiter oder Passagier im Notfall geöffnet.

Um zu verhindern, dass nach einem unvollständigen oder fehlerhaften Schließen einer Tür ein Druckunterschied zwischen dem Innenraum des Flugzeugs und dem Außenraum bzw. der Flugzeugumgebung aufgebaut wird, ist üblicherweise in der Tür eine Druckaufbauverhinderungsklappe (engl. "Pressure Prevent Means" oder auch "Vent flap") vorgesehen. Die Druckaufbauverhinderungsklappe ist so angeordnet, dass sie einen freien Durchflussbereich (engl. "Free Flow Area") in der Tür bedecken oder freigeben kann. Die Druckaufbauverhinderungsklappe kann dazu eingerichtet sein, den freien Durchflussbereich nur dann vollständig abzudichten bzw. zu bedecken, wenn die Tür komplett und korrekt verschlossen und/oder verriegelt ist.

Bei einem Öffnen der Tür während eines vorherrschenden Druckunterschieds kann ein Druckausgleich zumindest teilweise durch die Druckaufbauverhinderungsklappe erfolgen. Daher wird der Begriff "Druckaufbauverhinderungsklappe" vorliegend synonym mit dem Begriff "Druckausgleichsklappe" verwendet, und der "freie Durchflussbereich" wird auch als "Druckausgleichsöffnung" bezeichnet.

Um ein ungewünschtes Öffnen einer Tür zum Beispiel während des Flugbetriebs zu verhindern, kommen üblicherweise Verriegelungsmechanismen zum Einsatz. In bekannten Fahrzeugtüren sind diese Verriegelungsmechanismen komplex aufgebaut und relativ schwer. Ferner sehen bekannte Fahrzeugtüren elektrische Bauteile vor, die in der beweglichen Tür angeordnet sind, was eine elektrische Kontaktierung schwierig macht und die Herstellung der Tür kompliziert. All dies bedingt ein hohes Gewicht und hohe Fertigungskosten von bekannten Fahrzeugtüren.

Aus dem Dokument DE 10 2019 112336 A1 ist eine Türeinheit gemäß dem Oberbegriff des Anspruchs 1 bekannt. Weitere Türeinheiten mit einer in einer Fahrzeugtür angeordneten Überdruckklappe sind aus der EP 1 780 119 A2 und der US 2 748 855 A bekannt. Das Dokument US 2020/224462 A1 beschreibt den Einsatz elektrisch gesteuerter Bolzen zur Verriegelung einer Flugzeugtür.

Die Erfindung ist auf die Aufgabe gerichtet, eine Fahrzeugtür bereitzustellen, die trotz geringem Gewicht kostengünstig herstellbar und einbaubar ist.

Erfindungsgemäß wird eine Türeinheit mit den Merkmalen des Anspruchs 1 bereitgestellt, sowie ein Türsystem gemäß Anspruch 12 und ein Fahrzeug gemäß Anspruch 14.

Gemäß einem ersten Aspekt ist eine Türeinheit für ein Fahrzeug vorgesehen. Die Türeinheit umfasst eine Tür, die eingerichtet ist, in einer Schließstellung eine Öffnung in dem Fahrzeug zu bedecken und einen Fahrzeuginnenraum von einer Fahrzeugumgebung abzugrenzen, eine Druckausgleichsklappe, die dazu eingerichtet ist, in einer Abdichtungsstellung eine Druckausgleichsöffnung in der Tür zu bedecken und in einer Druckausgleichsstellung die Druckausgleichsöffnung zumindest teilweise freizugeben, und ein Verriegelungselement, welches dazu eingerichtet ist, in einem Verriegelungszustand die Tür in der Schließstellung zu verriegeln und in einem Entriegelungszustand die Tür zu entriegeln. Die Türeinheit umfasst ferner ein Blockierelement, welches dazu eingerichtet ist, in der Abdichtungsstellung der Druckausgleichsklappe eine Bewegung des Verriegelungselements von dem Verriegelungszustand in den Entriegelungszustand zu blockieren, wobei das Blockierelement an der Druckausgleichsklappe angeordnet ist.

Beispielsweise ist das Fahrzeug ein Luftfahrzeug, insbesondere ein Flugzeug. Die Tür kann eine Notausgangstür, insbesondere eine im Bereich der Tragflächen des Flugzeugs angeordnete Notausgangstür sein. Beispielsweise ist ein oberer Türbereich dazu eingerichtet, im Bereich eines Türsturzes angeordnet zu werden, während ein unterer Türbereich dazu eingerichtet ist, im Bereich einer Türschwelle angeordnet zu werden. Die Tür kann dazu eingerichtet sein, nach oben hin aufzuschwenken. Die Tür kann eine nach oben hin öffnende Flügeltür sein. Die Druckausgleichsöffnung kann in dem oberen Bereich der Tür eingebracht sein. Das Blockierelement ist beispielsweise in dem oberen Türbereich angeordnet. Das Verriegelungselement kann in dem oberen Türbereich angeordnet sein.

Das Blockierelement kann relativ zu der Druckausgleichsklappe rotationsfest oder/und translationsfest angeordnet sein. Das Blockierelement kann an der Druckausgleichsklappe befestigt sein. Das Blockierelement kann einstückig mit der Druckausgleichsklappe oder einem Trägerelement der Druckausgleichsklappe gefertigt sein. Das Blockierelement kann auch als von der Druckausgleichsklappe separates Bauteil gefertigt und an der Druckausgleichklappe befestigt sein, beispielsweise mittels einer Schraubverbindung.

Beispielsweise ist das Blockierelement dazu eingerichtet, in der Abdichtungsstellung der Druckausgleichsklappe die Bewegung des Verriegelungselements von dem Verriegelungszustand in den Entriegelungszustand durch einen direkten Kontakt mit dem Verriegelungselement zu blockieren. Beispielsweise ist das Blockierelement dazu eingerichtet, in der Abdichtungsstellung der Druckausgleichsklappe eine Translation des Verriegelungselements von dem Verriegelungszustand in den Entriegelungszustand zu blockieren. Das Blockierelement kann dazu eingerichtet sein, in der Abdichtungsstellung der Druckausgleichsklappe die Translation des Verriegelungselements in einer im Wesentlichen parallel zu der Druckausgleichsklappe verlaufenden Richtung zu blockieren. Diese Richtung kann parallel zu einer Achse verlaufen, um die zumindest ein Teil der Druckausgleichsklappe rotiert, wenn die Druckausgleichsklappe von der Abdichtungsstellung in die Druckausgleichsstellung oder/und von der Druckausgleichsstellung in eine Öffnungsstellung bewegt wird.

Das Blockierelement kann in Bezug auf die Druckausgleichsklappe in Richtung des Fahrzeuginnenraums verlaufen. Das Blockierelement kann von der Druckausgleichsklappe in Richtung des Fahrzeuginnenraums abstehen. Beispielsweise steht das Blockierelement zumindest teilweise über einen Außenrand der Druckausgleichsklappe über.

Das Blockierelement kann dazu eingerichtet sein, in der Druckausgleichsstellung der Druckausgleichsklappe die Bewegung des Verriegelungselements von dem Verriegelungszustand in den Entriegelungszustand zu gestatten. Beispielsweise ist das Blockierelement derart ausgelegt, dass es in der Druckausgleichsstellung der Druckausgleichsklappe von dem Verriegelungselement in Richtung des Fahrzeuginnenraums oder/und in Richtung der Türmitte beabstandet ist.

Die Druckausgleichsklappe kann dazu eingerichtet sein, die Druckausgleichsöffnung durch eine Beabstandung in Richtung Fahrzeuginnenraum zumindest teilweise freizugeben. Die Türeinheit kann derart eingerichtet sein, dass die Druckausgleichsklappe durch eine im Wesentlichen translatorische Bewegung der Druckausgleichsklappe in Richtung des Fahrzeuginnenraums von der Abdichtungsstellung in die Druckausgleichsstellung versetzbar ist. Die Druckausgleichsklappe befindet sich in diesem Fall in der Druckausgleichsstellung weiter im Fahrzeuginnenraum als in der Abdichtungsstellung.

Die Türeinheit umfasst ferner einen Aktuationsmechanismus, der dazu eingerichtet ist, bei einer Bewegung der Druckausgleichsklappe von der Druckausgleichsstellung in eine Öffnungsstellung das Verriegelungselement von dem Verriegelungszustand in den Entriegelungszustand zu bewegen. Der Aktuationsmechanismus kann mit einem Handgriff oder/und mit der Druckausgleichsklappe (z.B. direkt oder unter Kontakt) verbunden sein. Der Aktuationsmechanismus oder/und der Handgriff können mit der Druckausgleichsklappe (z.B. direkt oder unter Kontakt) verbunden sein.

Beispielsweise umfasst die Türeinheit ein Türzustandsindikationselement, welches derart angeordnet ist, dass es sich bei einer Bewegung der Druckausgleichsklappe von der Abdichtungsstellung in die Druckausgleichsstellung in Richtung der Türmitte bewegt. Das Türzustandsindikationselement ist beispielsweise in dem oberen Türbereich angeordnet. Das Türzustandsindikationselement ist beispielsweise ein rein mechanisches Bauteil. Das Türzustandsindikationselement kann an den Aktuationsmechanismus, die Druckausgleichsklappe oder/und den Handgriff gekoppelt sein.

Beispielsweise umfasst die Tür ausschließlich mechanische Bauteile. In anderen Worten umfasst die Tür in einem Beispiel keine elektrokabelgebundenen Bauteile oder/und keine elektrischen Bauteile.

Gemäß einem zweiten Aspekt ist ein Türsystem vorgesehen. Das Türsystem umfasst die Türeinheit gemäß dem ersten Aspekt, einen Türrahmen mit einem Türsturz und einer Türschwelle, und ein Verriegelungsgegenstück, welches im Bereich des Türsturzes angeordnet und dazu eingerichtet ist, in der Schließstellung der Tür im Verriegelungszustand des Verriegelungselements mit dem Verriegelungselement zusammenzuwirken, um die Tür zu verriegeln. Der Türrahmen kann Teil eines Fahrzeugrumpfs sein, in den Fahrzeugrumpf einbaubar oder in dem Fahrzeugrumpf eingebaut sein.

Das Türsystem kann ferner einen an dem Türrahmen angeordneten, insbesondere elektrisch betriebenen Abstandssensor umfassen, der dazu eingerichtet ist, einen Abstand zwischen dem Abstandssensor und dem Türzustandsindikationselement zu messen.

Beispielsweise umfasst das Türsystem ferner einen an dem Türrahmen angeordneten elektrisch betriebenen Sicherheitsaktuator, der dazu eingerichtet ist, in einem aktivierten Zustand eine Bewegung des Verriegelungselements von dem Verriegelungszustand in den Entriegelungszustand zu blockieren, und in einem deaktivierten Zustand die Bewegung des Verriegelungselements von dem Verriegelungszustand in den Entriegelungszustand freizugeben. Der elektrisch betriebene Sicherheitsaktuator kann zur Blockierung des Verriegelungselements zum Beispiel das Verriegelungselement kontaktieren.

Gemäß einem dritten Aspekt ist ein Fahrzeug vorgesehen, welches die Türeinheit gemäß dem ersten Aspekt oder das Türsystem gemäß dem zweiten Aspekt umfasst. Das Fahrzeug kann ein Luftfahrzeug, insbesondere ein Flugzeug sein. Beispielsweise ist die Türeinheit bzw. das Türsystem im Bereich (z.B. insbesondere oberhalb von) einer Tragfläche des Flugzeugs angeordnet.

Bevorzugte Ausführungsformen der Erfindung werden nun anhand der beigefügten schematischen Zeichnungen erläutert, wobei
- Fig. 1: eine schematische Außenansicht einer Türeinheit zeigt,
- Fig. 2: einen Bewegungsablauf beim Öffnen der Tür der Türeinheit bzw. eines Türsystems zeigt,
- Fig. 3a-3c: einen Ausschnitt des Türsystems in einem ersten Zustand zeigt,
- Fig. 4a-4c: den Ausschnitt des Türsystems in einem zweiten Zustand zeigt,
- Fig. 5a-5c: den Ausschnitt des Türsystems in einem dritten Zustand zeigt, und
- Fig. 6: ein Fahrzeug mit der Türeinheit bzw. dem Türsystem zeigt.

Im Folgenden bezeichnen dieselben Bezugszeichen dieselben funktionellen oder konstruktiven Merkmale.

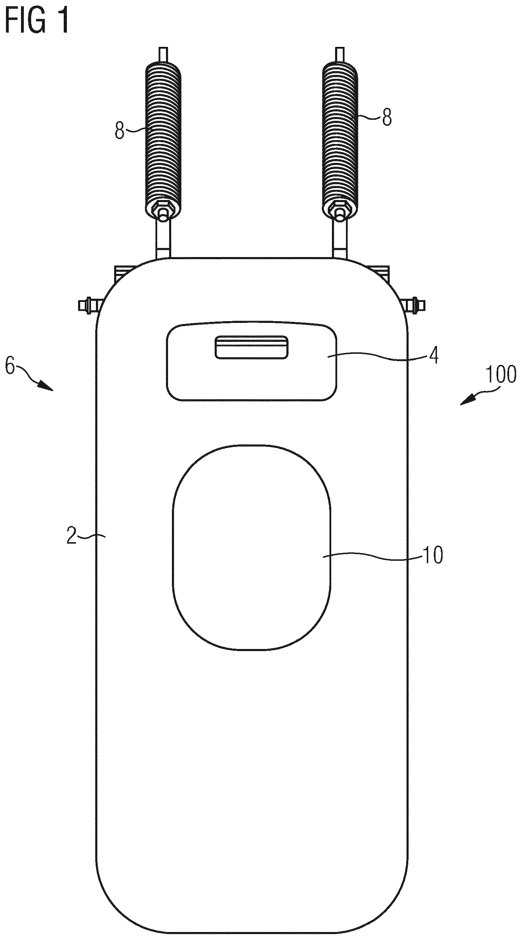

Fig. 1 zeigt eine schematische Außenansicht einer Türeinheit 100 für ein Fahrzeug. Die Türeinheit 100 umfasst eine Tür 2 und eine Druckausgleichsklappe 4, die in einem oberen Türbereich 6 angeordnet ist. Ferner ist ein optionaler Öffnungsmechanismus 8 dargestellt, der mit der Türeinheit verbunden ist und dazu dient, die Tür 2 aus einer Schließstellung, in der die Tür 2 eine Öffnung in dem Fahrzeug bedeckt, nach oben hin zu öffnen. Auch umfasst die Tür 2 optional ein Fenster 10.

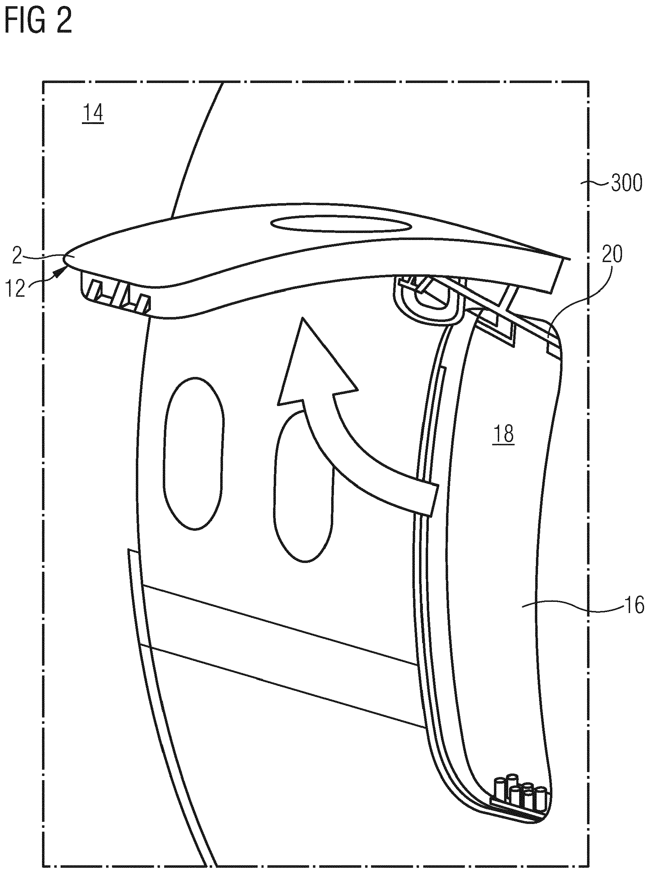

Eine beispielhafte Öffnungsbewegung der Tür 2 ist in Fig. 2 schematisch dargestellt. Die gesamte Tür 2 wird hierbei nach oben entsprechend der Funktionsweise einer Flügeltür aufgeklappt. Die Unterkante 12 der Tür 2 bewegt sich hierbei auf einer Kreisbahn in Richtung der Fahrzeugumgebung 14 und nach oben. Ein unterer Teil der Tür 2 legt hierbei eine größere Strecke zurück als der obere Teil 6 der Tür 2. Um die Tür derart zu bewegen, kann ein Gelenkmechanismus 20 vorgesehen sein.

Vor dem Öffnen der Tür 2 bedeckt die Tür 2 die Öffnung 16 und grenzt einen Fahrzeuginnenraum 18 von der Fahrzeugumgebung 14 ab. Im geöffneten Zustand verdeckt die Tür nicht mehr die Öffnung 16 im Fahrzeug 300. So können Fahrgäste nach dem Öffnen der Tür 2 durch die Öffnung 16 das Fahrzeug 300 verlassen.

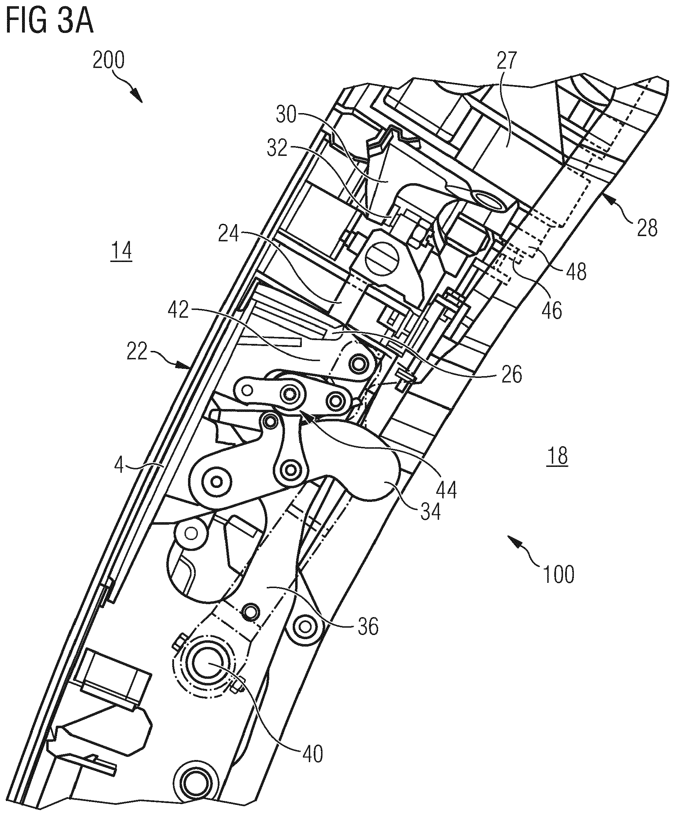

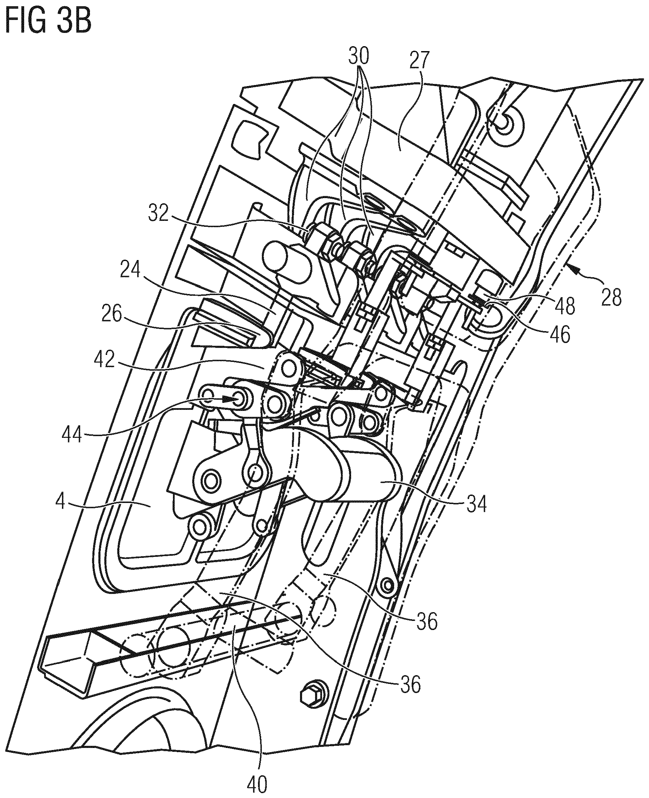

Fig. 3a-3c zeigen einen Ausschnitt eines Türsystems 200 in einem ersten Zustand. Das Türsystem 200 umfasst die Türeinheit 100. In dem ersten Zustand des Türsystems 200 befindet sich die Druckausgleichsklappe 4 in einer Abdichtungsstellung. In dieser Abdichtungsstellung bedeckt die Druckausgleichsklappe 4 eine Druckausgleichsöffnung 22 in der Tür 2. So wird die Druckausgleichsöffnung 22 in der Tür 2 druckdicht verschlossen.

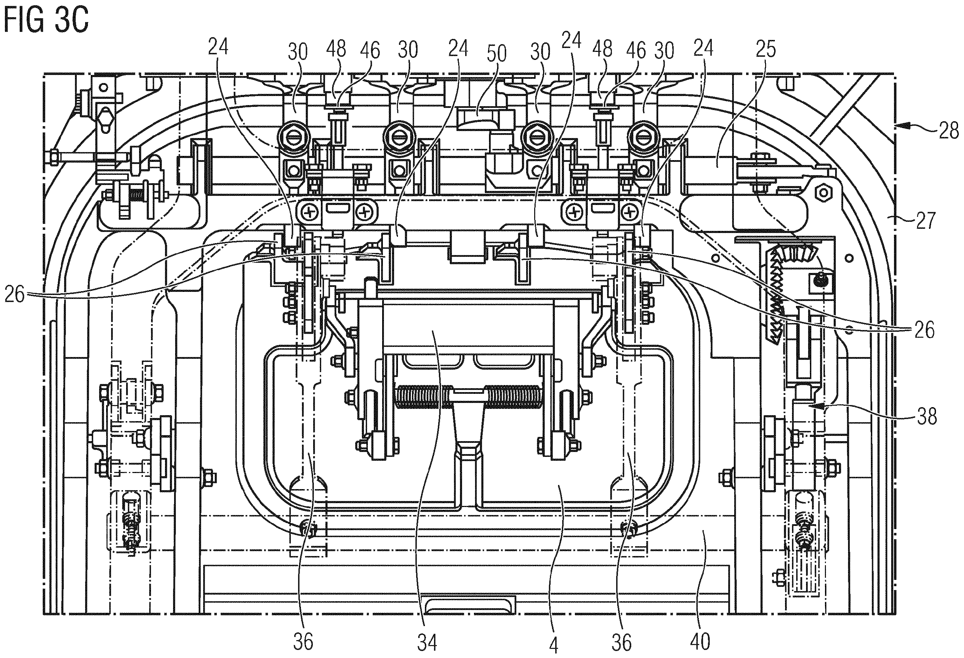

Im ersten Zustand des Türsystems 200 ist die Tür 2 geschlossen und verriegelt. Die Türeinheit 100 umfasst hierzu ein Verriegelungselement 24. Das Verriegelungselement 24 befindet sich in den Fig. 3a-3c in einen Verriegelungszustand, in welchem es die Tür 2 in der Schließstellung verriegelt. Das Türsystem 200 umfasst einen Türrahmen 27 mit einem Türsturz 28 und einer Türschwelle, wobei im Bereich des Türsturzes 28 ein Verriegelungsgegenstück 30 angeordnet ist. Das Verriegelungsgegenstück 30 wirkt in dem ersten Zustand des Türsystems 200 mit dem Verriegelungselement 24 zusammen, um die Tür 2 zu verriegeln. Das Verriegelungselement 24 wirkt mit einem der Druckausgleichsklappe 4 abgewandten Ende mit dem Verriegelungsgegenstück 30 zusammen. Das Verriegelungselement 24 kann über ein in das Verriegelungselement 24 eingeschraubtes Justierelement 32 mit dem Verriegelungsgegenstück 30 in Kontakt stehen. Das Verriegelungsgegenstück 30 verriegelt die Tür 2 dadurch, dass es eine Bewegung des Verriegelungselements 24 in Richtung der Fahrzeugumgebung 14 hin blockiert. So kann die Tür nicht wie in Fig. 2 gezeigt nach außen hin geöffnet werden. Um die Tür 2 zu entriegeln, muss das Verriegelungselement 24 gegenüber dem relativ zum Türrahmen 27 unbeweglichen Verriegelungsgegenstück 30 in der Türebene verschoben werden (in Fig. 3c nach links oder rechts).

Die Türeinheit 100 umfasst ein Blockierelement 26. Dieses dient dem Unterbinden eines versehentlichen Verschiebens des Verriegelungselements 24. Das Blockierelement 25 ist in einem oberen Bereich der Druckausgleichklappe 4 angeordnet. In der gezeigten Ausführungsform ist das Blockierelement 26 einstückig mit der Druckausgleichsklappe 4 gefertigt und steht von der Druckausgleichsklappe 4 in Richtung des Fahrzeuginnenraums 18 ab. Ein Teil des Blockierelements 26 steht über einen oberen Rand der Druckausgleichsklappe 4 über. Das Blockierelement 26 verhindert in dem ersten Zustand des Türsystems 200 die Verschiebung bzw. Translation des Verriegelungselements 24 in einer Richtung, die parallel zu einem oberen Rand der Druckausgleichklappe 4 verläuft (in Fig. 3c nach links hin). Man kann also sagen, dass das Blockierelement 26 dazu eingerichtet ist, in der Abdichtungsstellung der Druckausgleichsklappe eine Bewegung des Verriegelungselements 24 von dem Verriegelungszustand in einen Entriegelungszustand zu blockieren, wobei das Verriegelungselement 24 in dem Entriegelungszustand die Tür entriegelt. In anderen Worten kann das Verriegelungselement 24 erst dann die Tür entriegeln, wenn das Blockierelement 26 die Bewegung von des Verriegelungselements 24 von dem Verriegelungszustand in den Entriegelungszustand gestattet.

Es versteht sich, dass eine Vielzahl von Blockierelementen 26 und Verriegelungselementen 24 vorgesehen sein können. Die Verriegelungselemente 24 können relativ zueinander unbeweglich angeordnet sein. Beispielsweise sind die Verriegelungselemente 24 an derselben Welle 25 befestigt. Wie in Fig. 3c zu erkennen ist, wird im ersten Zustand des Türsystems 200 eine Bewegung der Verriegelungselemente 24 nach links hin blockiert durch die Blockierelemente 26.

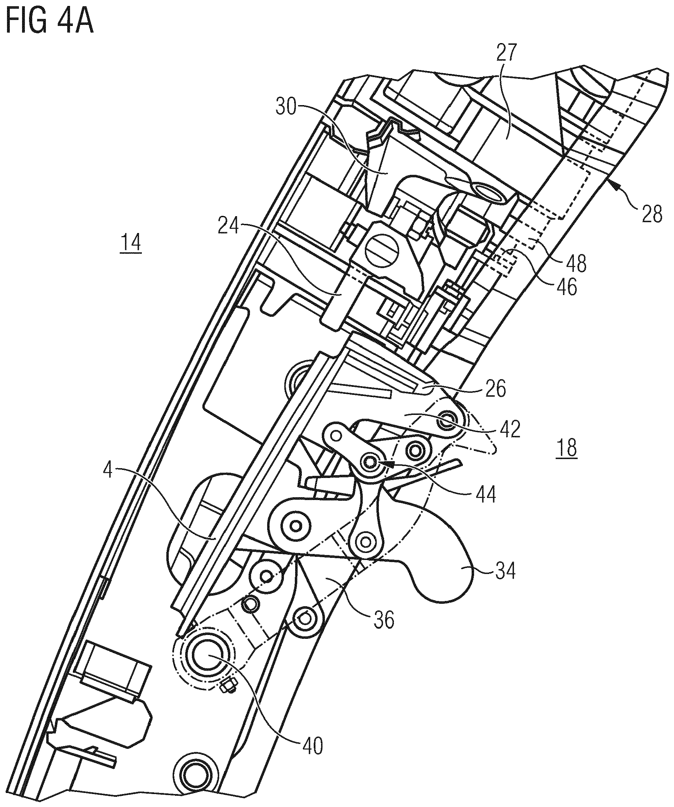

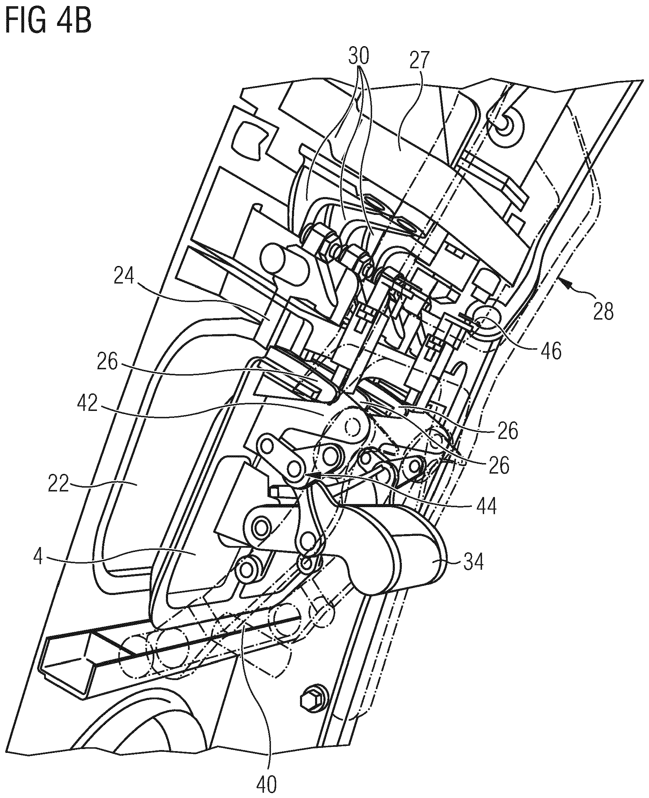

Fig. 4a-4c zeigen den Ausschnitt des Türsystems 200 in einem zweiten Zustand. In dem zweiten Zustand des Türsystems 200 befindet sich die Druckausgleichsklappe 4 in einer Druckausgleichsstellung. In dieser Druckausgleichsstellung gibt die Druckausgleichsklappe 4 die Druckausgleichsöffnung 22 zumindest teilweise frei, da sie in Richtung des Fahrzeuginnenraums 18 bewegt wurde. Die Druckausgleichsklappe 4 ist also in der Druckausgleichsstellung von der Druckausgleichsöffnung 22 in Richtung des Fahrzeuginnenraums 18 beabstandet. Somit wird ein Druckausgleich zwischen der Fahrzeugumgebung 14 und dem Fahrzeuginnenraum 18 über die Druckausgleichsöffnung 22 ermöglicht. Zu manuellen Bewegung der Druckausgleichsklappe 4 ist in der Türeinheit 100 ein Handgriff 34 vorgesehen, der an der Druckausgleichsklappe 4 befestigt ist. Die Druckausgleichsklappe 4 ist über zumindest einen Arm 36 der Türeinheit 100 mit der Tür 2 verbunden. In dem gezeigten Beispiel sind hierfür zwei in einer Breitenrichtung der Tür 2 beabstandete Arme 36 vorgesehen.

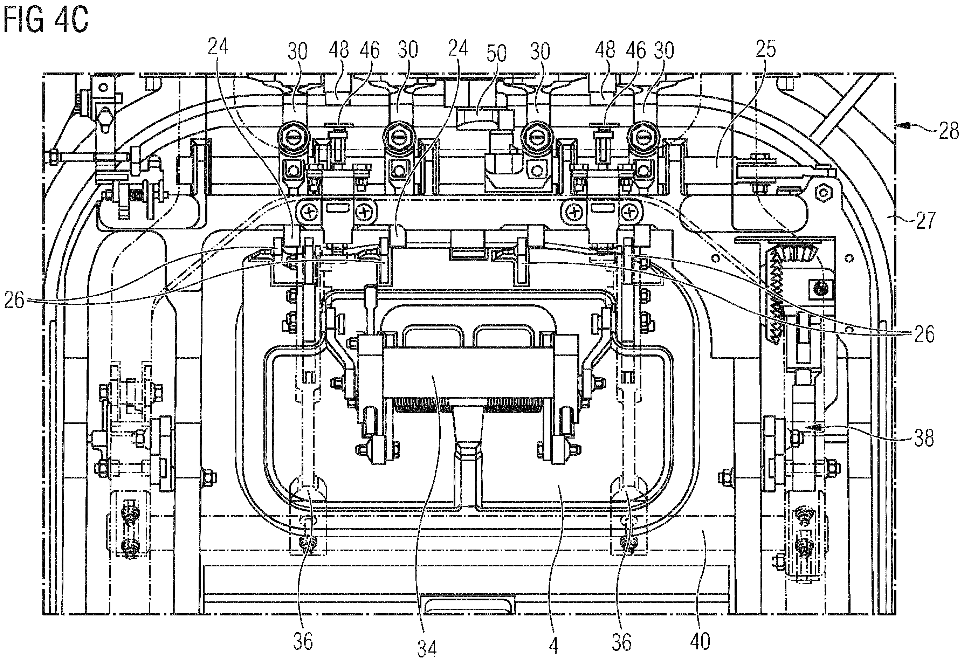

Im zweiten Zustand des Türsystems 200 ist die Tür 2 weiterhin geschlossen und verriegelt. Dies liegt daran, dass das Verriegelungselement 24 auch im zweiten Zustand weiter mit dem Verriegelungsgegenstück 30 zusammenwirkt, wie insbesondere in Fig. 4c zu erkennen ist. Das Verriegelungselement 24 ist also auch hier im Verriegelungszustand. Jedoch gestattet das Blockierelement 26 in der Druckausgleichsstellung der Druckausgleichsklappe 4, dass sich das Verriegelungselement 24 lateral verschiebt. In anderen Worten gestattet das Blockierelement 26 im zweiten Zustand des Türsystems 200 eine Bewegung des Verriegelungselements 24 von dem Verriegelungszustand in den Entriegelungszustand. Dies ist insbesondere in Fig. 4a zu erkennen, gemäß der das Blockierelement 26 in der Druckausgleichsstellung der Druckausgleichsklappe 4 von dem Verriegelungselement 26 in Richtung des Fahrzeuginnenraums 18 beabstandet ist. Das Verriegelungselement 26 kann somit in Fig. 4c nach links hin verschoben werden.

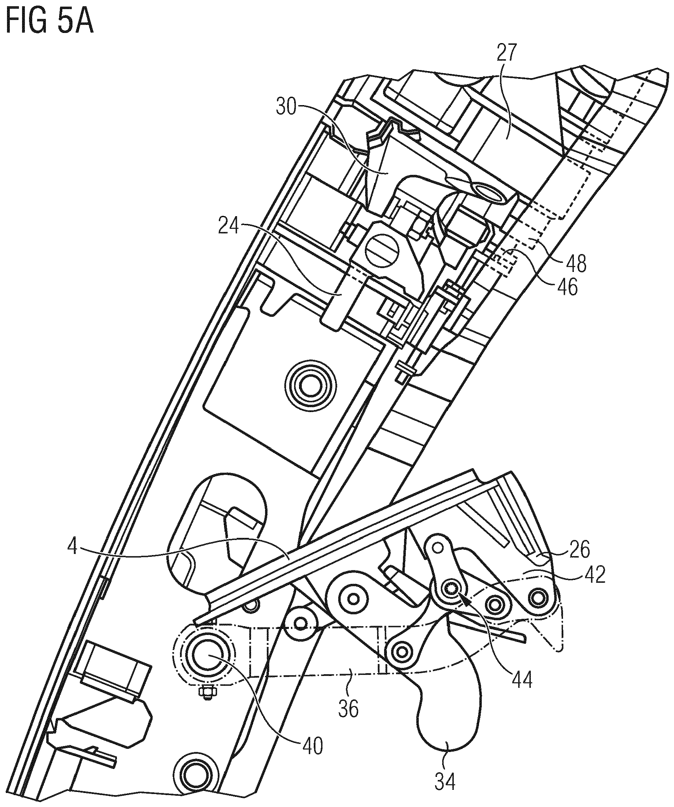

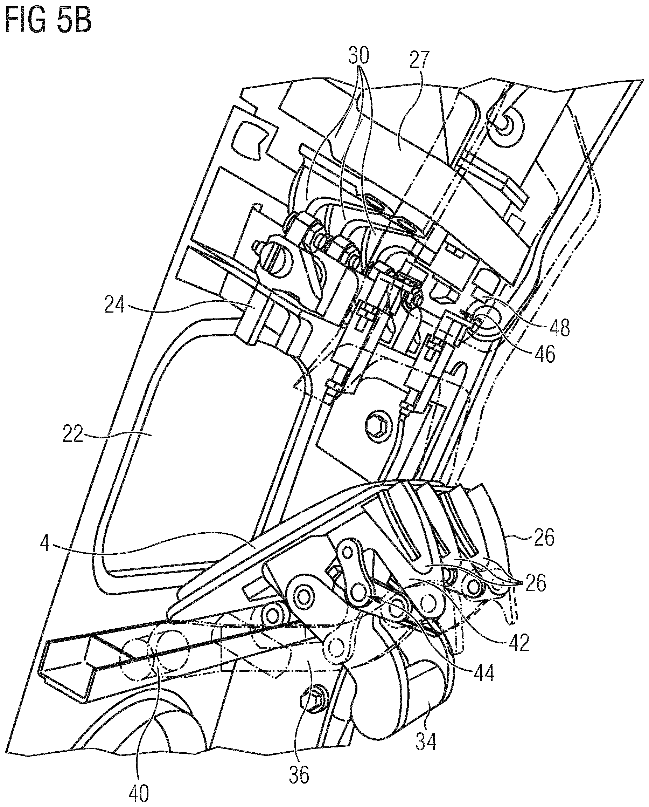

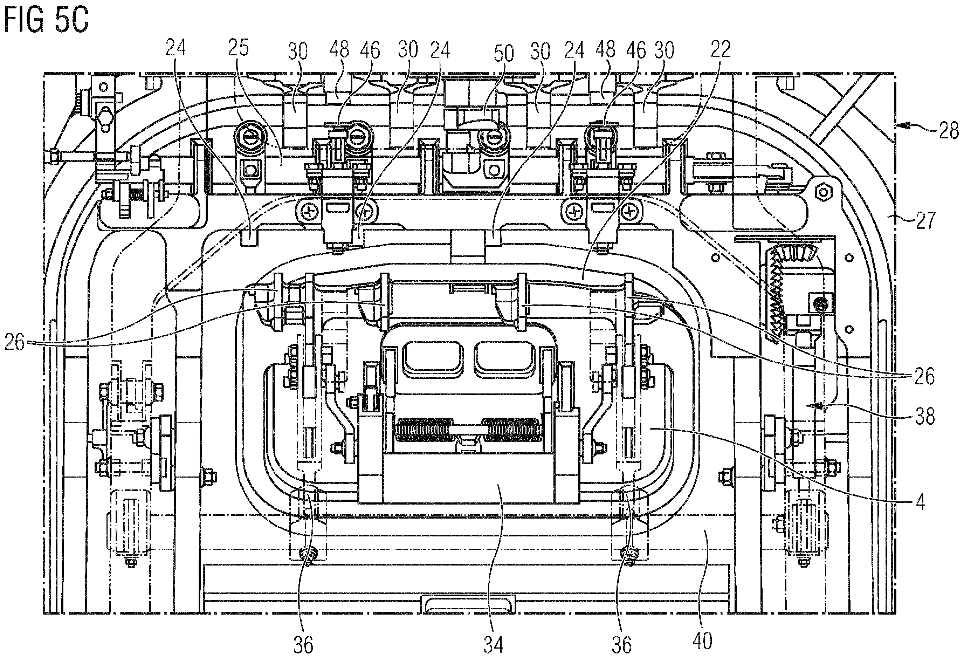

Fig. 5a-5c zeigen den Ausschnitt des Türsystems 200 in einem dritten Zustand. In dem dritten Zustand des Türsystems 200 befindet sich die Druckausgleichsklappe 4 in einer Öffnungsstellung und das Verriegelungselement 24 befindet sich im Entriegelungszustand. In anderen Worten ist die Tür 2 in diesem Zustand entriegelt und kann wie in Fig. 2 gezeigt geöffnet werden.

Die Türeinheit 100 umfasst einen Aktuationsmechanismus 38, der dazu eingerichtet ist, bei einer Bewegung der Druckausgleichsklappe 4 von der Druckausgleichsstellung in die Öffnungsstellung das Verriegelungselement 24 von dem Verriegelungszustand in den Entriegelungszustand zu bewegen. Der Aktuationsmechanismus 38 ist mit dem zumindest einen Arm 36 verbunden, welcher bei einer Bewegung der Druckausgleichsklappe bewegt wird. Der Aktuationsmechanismus 38 kann eine Welle 40 umfassen, die mit dem zumindest einen Arm 36 verbunden ist und bei einer Bewegung des Arms 36 von dem Arm 36 gedreht wird. Die Welle kann mit einem Übersetzungsmechanismus verbunden sein, der seitlich neben der Druckausgleichsöffnung 22 an der Tür 2 angeordnet ist. Der Übersetzungsmechanismus kann dazu eingerichtet sein, eine Drehbewegung der Welle in eine Translation des Verriegelungselements 24 umzusetzen.

Im Vergleich zur Druckausgleichsstellung befindet sich die Druckausgleichsklappe 4 in der Öffnungsstellung noch weiter in Richtung des Fahrzeuginnenraums 18. Insbesondere wird die Druckausgleichsklappe 4 von der Druckausgleichsstellung in die Öffnungsstellung gedreht. Dies wird im Vergleich der Fig. 3a, 4a und 5a deutlich. Zunächst wird die Druckausgleichsklappe 4 durch Betätigung des Handgriffs 34 in Richtung des Fahrzeuginnenraums 18 verschoben, um von der Abdichtungsstellung in die Druckausgleichsstellung versetzt zu werden. Anschließend wird die Druckausgleichsklappe 4 durch weitere Betätigung des Handgriffs 34 in Richtung des Fahrzeuginnenraums 18 gedreht bzw. aufgeklappt, um von der Druckausgleichsstellung in die Öffnungsstellung versetzt zu werden. Um diese Art der Bewegung der Druckausgleichsklappe 4 sicherzustellen, kann die Druckausgleichsklappe 4 einen am oberen Ende der Druckausgleichsklappe 4 in Richtung des Fahrzeuginnenraums 18 abstehenden Befestigungsteil 42 umfassen, der beweglich an dem Arm 36 befestigt ist.

Der Arm 36 kann wiederum fest mit der Welle 40 verbunden sein. Die Welle 40 kann translationsfest an der Tür 2 angeordnet sein. Auch kann die Türeinheit 100 ein Scherengelenksystem 42 umfassen, welches während des Betätigens des Handgriffs 34 einen Winkel zwischen der Druckausgleichsklappe 4 und dem Arm 36 reguliert.

Die Türeinheit 100 umfasst beispielsweise ausschließlich mechanische Bauelemente, also keine kabelgebundenen bzw. elektrischen Bauteile. Vorliegend umfassend die Türeinheit 100 ein Türzustandsindikationselement 46, welches derart angeordnet ist, dass es sich bei einer Bewegung der Druckausgleichsklappe 4 von der Abdichtungsstellung in die Druckausgleichsstellung vom oberen Ende der Tür 2 weg bzw. in Richtung der Türmitte bewegt. Hierzu kann das Türzustandsindikationselement 46 mit dem Handgriff 34, dem Arm 36, der Druckausgleichsklappe 4 oder/und dem Aktuationsmechanismus 38 gekoppelt sein. Das Türsystem 200 umfassend einen an dem Türrahmen 17 angeordneten Abstandssensor 48, der dazu eingerichtet ist, einen Abstand zwischen dem Abstandssensor 48 und dem Türzustandsindikationselement 46 zu messen. Der Abstandssensor 48 ist somit rumpfseitig angeordnet, sodass in der Tür 2 kein solcher Abstandssensor verbaut werden muss.

Auch weitere elektrische Komponenten können rumpfseitig bzw. am Türrahmen 17 angeordnet sein. Beispielsweise umfasst das Türsystem 200 einen an dem Türrahmen angeordneten elektrisch betriebenen Sicherheitsaktuator 50 ("Flight Lock Actuator"), der dazu eingerichtet ist, in einem aktivierten Zustand eine Bewegung des Verriegelungselements 24 von dem Verriegelungszustand in den Entriegelungszustand zu blockieren, und in einem deaktivierten Zustand die Bewegung des Verriegelungselements 24 von dem Verriegelungszustand in den Entriegelungszustand freizugeben.

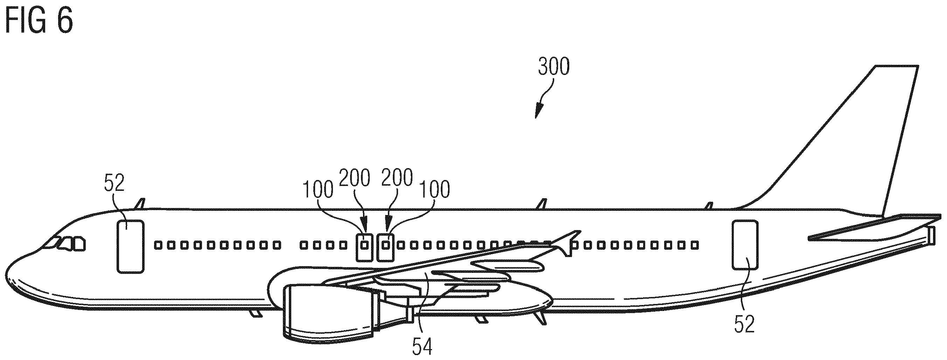

Fig. 6 zeigt ein Fahrzeug 300 mit der Türeinheit 100 bzw. dem Türsystem 200. Das Fahrzeug 300 aus Fig. 6 ist ein Flugzeug. Das Flugzeug ist auf die Beförderung von Passagieren und/oder Fracht ausgelegt. Es verfügt in einem vorderen und in einem hinteren Bereich über Einstiegstüren 52. Oberhalb der Tragflächen 54 sind vorliegend zwei Türsysteme 200 vorgesehen. Diese dienen in der dargestellten Variante als Notausgang.

Es versteht sich, dass Modifikationen der hierin beschriebenen Aspekte und Ausführungsformen möglich sind. Beispielsweise könnte das Verriegelungselement 24 so ausgestaltet sein, dass es von dem Verriegelungszustand in den Entriegelungszustand gedreht werden muss. Der Übersetzungsmechanismus könnte dementsprechend angepasst werden. Auch der Bewegungsablauf der Druckausgleichsklappe 4 kann anders ausgestaltet sein - beispielsweise könnte die Druckausgleichsklappe 4 von der Abdichtungsposition in die Druckausgleichsposition gekippt werden.

Die Druckausgleichsklappe 4 kann gemäß der vorliegenden Offenbarung eine Doppelfunktion erfüllen, indem sie einerseits der Abdichtung bzw. Öffnung der Druckausgleichsöffnung 22 dient und andererseits die Verriegelung der Tür 2 sicherstellt. Durch die Anordnung des Blockierelements 26 an der Druckausgleichsklappe 4 können im Vergleich zu bestehenden Lösungen Gewicht und Herstellungskosten der Tür 2 eingespart werden. Auch eine rumpfseitige Anordnung elektrischer Komponenten, wie z.B. des Abstandssensors 48 und des Sicherheitsaktuators 50, verringert Gewicht und Fertigungskosten der Tür 2.

## Patentansprüche

1. Türeinheit (100) für ein Fahrzeug (300), umfassend:
eine Tür (2), die eingerichtet ist, in einer Schließstellung eine Öffnung (16) in dem Fahrzeug (300) zu bedecken und einen Fahrzeuginnenraum (18) von einer Fahrzeugumgebung (14) abzugrenzen;
eine Druckausgleichsklappe (4), die dazu eingerichtet ist, in einer Abdichtungsstellung eine Druckausgleichsöffnung (22) in der Tür (2) zu bedecken und in einer Druckausgleichsstellung die Druckausgleichsöffnung (22) zumindest teilweise freizugeben;
ein Verriegelungselement (24), welches dazu eingerichtet ist, in einem Verriegelungszustand die Tür (2) in der Schließstellung zu verriegeln und in einem Entriegelungszustand die Tür (2) zu entriegeln; und
einen Aktuationsmechanismus (38), der dazu eingerichtet ist, bei einer Bewegung der Druckausgleichsklappe (4) von der Druckausgleichsstellung in eine Öffnungsstellung das Verriegelungselement (24) von dem Verriegelungszustand in den Entriegelungszustand zu bewegen,
**dadurch gekennzeichnet, dass** die Türeinheit (100) ein Blockierelement (26) umfasst, welches dazu eingerichtet ist, in der Abdichtungsstellung der Druckausgleichsklappe (4) eine Bewegung des Verriegelungselements (24) von dem Verriegelungszustand in den Entriegelungszustand zu blockieren,
wobei das Blockierelement (26) an der Druckausgleichsklappe (4) angeordnet ist.

2. Türeinheit (100) nach Anspruch 1, wobei das Blockierelement (26) relativ zu der Druckausgleichsklappe (4) rotationsfest oder/und translationsfest angeordnet ist.

3. Türeinheit (100) nach Anspruch 2, wobei das Blockierelement (26) einstückig mit der Druckausgleichsklappe (4) oder einem Trägerelement der Druckausgleichsklappe (4) gefertigt ist.

4. Türeinheit (100) nach einem der Ansprüche 1 bis 3, wobei das Blockierelement (26) dazu eingerichtet ist, in der Abdichtungsstellung der Druckausgleichsklappe (4) eine Translation des Verriegelungselements (24) von dem Verriegelungszustand in den Entriegelungszustand zu blockieren.

5. Türeinheit (100) nach Anspruch 4, wobei das Blockierelement (26) dazu eingerichtet ist, in der Abdichtungsstellung der Druckausgleichsklappe (4) die Translation des Verriegelungselements (24) in einer im Wesentlichen parallel zu der Druckausgleichsklappe (4) verlaufenden Richtung zu blockieren.

6. Türeinheit (100) nach einem der Ansprüche 1 bis 5, wobei das Blockierelement (26) in Bezug auf die Druckausgleichsklappe (4) in Richtung des Fahrzeuginnenraums (18) verläuft.

7. Türeinheit (100) nach einem der Ansprüche 1 bis 6, wobei das Blockierelement (26) zumindest teilweise über einen Außenrand der Druckausgleichsklappe (4) übersteht.

8. Türeinheit (100) nach einem der Ansprüche 1 bis 7, wobei das Blockierelement (26) dazu eingerichtet ist, in der Druckausgleichsstellung der Druckausgleichsklappe (4) die Bewegung des Verriegelungselements (24) von dem Verriegelungszustand in den Entriegelungszustand zu gestatten.

9. Türeinheit (100) nach Anspruch 8, wobei das Blockierelement (26) derart ausgelegt ist, dass es in der Druckausgleichsstellung der Druckausgleichsklappe (4) von dem Verriegelungselement (24) in Richtung des Fahrzeuginnenraums (18) oder/und in Richtung der Türmitte beabstandet ist.

10. Türeinheit (100) nach einem der Ansprüche 1 bis 9, derart eingerichtet, dass die Druckausgleichsklappe (4) durch eine im Wesentlichen translatorische Bewegung der Druckausgleichsklappe (4) in Richtung des Fahrzeuginnenraums (18) von der Abdichtungsstellung in die Druckausgleichsstellung versetzbar ist.

11. Türeinheit (100) nach einem der Ansprüche 1 bis 10, ferner umfassend ein Türzustandsindikationselement (46), welches derart angeordnet ist, dass es sich bei einer Bewegung der Druckausgleichsklappe (4) von der Abdichtungsstellung in die Druckausgleichsstellung in Richtung der Türmitte bewegt.

12. Türsystem (200), umfassend:
die Türeinheit (100) nach einem der Ansprüche 1 bis 11;
einen Türrahmen (17) mit einem Türsturz (28) und einer Türschwelle; und
ein Verriegelungsgegenstück (30), welches im Bereich des Türsturzes (28) angeordnet und dazu eingerichtet ist, in der Schließstellung der Tür (2) im Verriegelungszustand des Verriegelungselements (24) mit dem Verriegelungselement (24) zusammenzuwirken, um die Tür (2) zu verriegeln.

13. Türsystem (200) nach Anspruch 12 sofern abhängig von Anspruch 11, ferner umfassend einen an dem Türrahmen (17) angeordneten Abstandssensor (48), der dazu eingerichtet ist, einen Abstand zwischen dem Abstandssensor (48) und dem Türzustandsindikationselement (46) zu messen oder/und ferner umfassend einen an dem Türrahmen (17) angeordneten elektrisch betriebenen Sicherheitsaktuator (50), der dazu eingerichtet ist, in einem aktivierten Zustand eine Bewegung des Verriegelungselements (24) von dem Verriegelungszustand in den Entriegelungszustand zu blockieren, und in einem deaktivierten Zustand die Bewegung des Verriegelungselements (24) von dem Verriegelungszustand in den Entriegelungszustand freizugeben.

14. Fahrzeug (300), insbesondere Flugzeug, umfassend die Türeinheit (100) nach einem der Ansprüche 1 bis 11 oder das Türsystem (200) nach einem der Ansprüche 12 oder 13.

## Claims

1. Door unit (100) for a vehicle (300), comprising:
a door (2) which is configured, in a closed position, to cover an opening (16) in the vehicle (300) and to delimit a vehicle interior (18) from a vehicle environment (14);
a pressure compensation flap (4) which is configured, in a sealing position, to cover a pressure compensation opening (22) in the door (2) and, in a pressure compensation position, to at least partially release the pressure compensation opening (22);
a locking element (24) which is configured, in a locking state, to lock the door (2) in the closed position and, in an unlocking state, to unlock the door (2); and
an actuation mechanism (38) which is configured, during a movement of the pressure compensation flap (4) from the pressure compensation position into an open position, to move the locking element (24) from the locking state into the unlocking state,
**characterized in that** the door unit (100) comprises a blocking element (26) which is configured, in the sealing position of the pressure compensation flap (4), to block a movement of the locking element (24) from the locking state into the unlocking state,
wherein the blocking element (26) is arranged on the pressure compensation flap (4).

2. Door unit (100) according to Claim 1, wherein the blocking element (26) is arranged so as to be rotationally secure and/or translationally secure relative to the pressure compensation flap (4).

3. Door unit (100) according to Claim 2, wherein the blocking element (26) is produced integrally with the pressure compensation flap (4) or a carrier element of the pressure compensation flap (4).

4. Door unit (100) according to one of Claims 1 to 3, wherein the blocking element (26) is configured, in the sealing position of the pressure compensation flap (4), to block a translation of the locking element (24) from the locking state into the unlocking state.

5. Door unit (100) according to Claim 4, wherein the blocking element (26) is configured, in the sealing position of the pressure compensation flap (4), to block the translation of the locking element (24) in a direction which extends substantially parallel with the pressure compensation flap (4).

6. Door unit (100) according to one of Claims 1 to 5, wherein the blocking element (26) extends in the direction of the vehicle interior (18) with respect to the pressure compensation flap (4).

7. Door unit (100) according to one of Claims 1 to 6, wherein the blocking element (26) protrudes at least partially over an outer edge of the pressure compensation flap (4).

8. Door unit (100) according to one of Claims 1 to 7, wherein the blocking element (26) is configured, in the pressure compensation position of the pressure compensation flap (4), to permit the movement of the locking element (24) from the locking state into the unlocking state.

9. Door unit (100) according to Claim 8, wherein the blocking element (26) is configured in such a manner that, in the pressure compensation position of the pressure compensation flap (4), it is spaced apart from the locking element (24) in the direction of the vehicle interior (18) and/or in the direction of the door centre.

10. Door unit (100) according to one of Claims 1 to 9, configured in such a manner that the pressure compensation flap (4) can be displaced by means of a substantially translational movement of the pressure compensation flap (4) in the direction of the vehicle interior (18) from the sealing position into the pressure compensation position.

11. Door unit (100) according to one of Claims 1 to 10, further comprising a door state indication element (46) which is arranged in such a manner that, during a movement of the pressure compensation flap (4) from the sealing position into the pressure compensation position, it moves in the direction of the door centre.

12. Door system (200), comprising:
the door unit (100) according to one of Claims 1 to 11;
a door frame (17) having a door lintel (28) and a door threshold; and
a locking counter-piece (30) which is arranged in the region of the door lintel (28) and which is configured, in the closed position of the door (2) in the locking state of the locking element (24), to cooperate with the locking element (24) in order to lock the door (2).

13. Door system (200) according to Claim 12 when dependent on Claim 11, further comprising a spacing sensor (48) which is arranged on the door frame (17) and which is configured to measure a spacing between the spacing sensor (48) and the door state indication element (46) and/or further comprising an electrically operated safety actuator (50) which is arranged on the door frame (17) and which is configured, in an activated state, to block a movement of the locking element (24) from the locking state into the unlocking state and, in a deactivated state, to release the movement of the locking element (24) from the locking state into the unlocking state.

14. Vehicle (300), in particular an aircraft, comprising the door unit (100) according to one of Claims 1 to 11 or the door system (200) according to either Claim 12 or 13.

## Revendications

1. Unité de porte (100) pour un véhicule (300), comprenant :
une porte (2) qui est conçue pour recouvrir une ouverture (16) dans le véhicule (300) et pour délimiter un espace intérieur de véhicule (18) d'un environnement de véhicule (14) dans une position de fermeture ;
un volet de compensation de pression (4) qui est conçu pour recouvrir une ouverture de compensation de pression (22) dans la porte (2) dans une position d'étanchéité et pour libérer au moins partiellement l'ouverture de compensation de pression (22) dans une position de compensation de pression ;
un élément de verrouillage (24), lequel est conçu pour verrouiller la porte (2) dans la position de fermeture dans un état de verrouillage et pour déverrouiller la porte (2) dans un état de déverrouillage ; et
un mécanisme d'actionnement (38) qui est conçu pour déplacer l'élément de verrouillage (24) de l'état de verrouillage à l'état de déverrouillage lors d'un déplacement du volet de compensation de pression (4) de la position de compensation de pression à une position d'ouverture,
**caractérisée en ce que** l'unité de porte (100) comprend un élément de blocage (26), lequel est conçu pour bloquer un déplacement de l'élément de verrouillage (24) de l'état de verrouillage à l'état de déverrouillage dans la position d'étanchéité du volet de compensation de pression (4),
l'élément de blocage (26) étant disposé sur le volet de compensation de pression (4).

2. Unité de porte (100) selon la revendication 1, l'élément de blocage (26) étant disposé de manière solidaire en rotation et/ou solidaire en translation par rapport au volet de compensation de pression (4).

3. Unité de porte (100) selon la revendication 2, l'élément de blocage (26) étant fabriqué d'une seule pièce avec le volet de compensation de pression (4) ou un élément porteur du volet de compensation de pression (4).

4. Unité de porte (100) selon l'une des revendications 1 à 3, l'élément de blocage (26) étant conçu pour bloquer une translation de l'élément de verrouillage (24) de l'état de verrouillage à l'état de déverrouillage dans la position d'étanchéité du volet de compensation de pression (4).

5. Unité de porte (100) selon la revendication 4, l'élément de blocage (26) étant conçu pour bloquer la translation de l'élément de verrouillage (24) dans une direction s'étendant sensiblement parallèlement au volet de compensation de pression (4) dans la position d'étanchéité du volet de compensation de pression (4).

6. Unité de porte (100) selon l'une des revendications 1 à 5, l'élément de blocage (26) s'étendant en direction de l'espace intérieur de véhicule (18) par rapport au volet de compensation de pression (4).

7. Unité de porte (100) selon l'une des revendications 1 à 6, l'élément de blocage (26) dépassant au moins partiellement au-delà d'un bord extérieur du volet de compensation de pression (4).

8. Unité de porte (100) selon l'une des revendications 1 à 7, l'élément de blocage (26) étant conçu pour permettre le déplacement de l'élément de verrouillage (24) de l'état de verrouillage à l'état de déverrouillage dans la position de compensation de pression du volet de compensation de pression (4).

9. Unité de porte (100) selon la revendication 8, l'élément de blocage (26) étant configuré de telle sorte qu'il est espacé de l'élément de verrouillage (24) en direction de l'espace intérieur de véhicule (18) et/ou en direction du centre de porte dans la position de compensation de pression du volet de compensation de pression (4).

10. Unité de porte (100) selon l'une des revendications 1 à 9, conçue de telle sorte que le volet de compensation de pression (4) peut être décalé par un déplacement sensiblement de translation du volet de compensation de pression (4) en direction de l'espace intérieur de véhicule (18) de la position d'étanchéité à la position de compensation de pression.

11. Unité de porte (100) selon l'une des revendications 1 à 10, comprenant en outre un élément d'indication d'état de porte (46), lequel est disposé de telle sorte qu'il se déplace en direction du centre de porte lors d'un déplacement du volet de compensation de pression (4) de la position d'étanchéité à la position de compensation de pression.

12. Système de porte (200), comprenant :
l'unité de porte (100) selon l'une des revendications 1 à 11 ;
un cadre de porte (17) comportant un linteau de porte (28) et un seuil de porte ; et
une pièce conjuguée de verrouillage (30), laquelle est disposée dans la région du linteau de porte (28) et est conçue, dans la position de fermeture de la porte (2), dans l'état de verrouillage de l'élément de verrouillage (24), pour coopérer avec l'élément de verrouillage (24), afin de de verrouiller la porte (2).

13. Système de porte (200) selon la revendication 12 lorsqu'elle dépend de la revendication 11, comprenant en outre un capteur de distance (48) disposé sur le cadre de porte (17), lequel capteur de distance est conçu pour mesurer une distance entre le capteur de distance (48) et l'élément d'indication d'état de porte (46) et/ou comprenant en outre un actionneur de sécurité (50) fonctionnant électriquement disposé sur le cadre de porte (17), lequel actionneur de sécurité est conçu pour bloquer un déplacement de l'élément de verrouillage (24) de l'état de verrouillage à l'état de déverrouillage dans un état activé, et pour libérer le déplacement de l'élément de verrouillage (24) de l'état de verrouillage à l'état de déverrouillage dans un état désactivé.

14. Véhicule (300), en particulier aéronef, comprenant l'unité de porte (100) selon l'une des revendications 1 à 11 ou le système de porte (200) selon l'une des revendications 12 ou 13.
